# EUROPEAN PATENT APPLICATION

(11) **EP 2 269 489 A1**
(43) Date of publication of application: **05.01.2011**
(21) Application number: 10164331.0
(22) Date of filing: 28.05.2010
(51) Int. Cl.: A47J 42/04, A47J 42/46

(54) **Multi-purpose solid material grinder**

(30) Priority: 15.06.2009 CN 200920153423 U
(71) Applicant: Abdoolally Ebrahim Housewares Limited, Central Hong Kong (CN)
(72) Inventor: Fong, Chun Keung Aurice, Hong Kong (CN)
(74) Representative: von Kreisler Selting Werner

(57) **Abstract**

This utility patent is a multi-purpose solid material grinder. It includes a shell (100). The interior space of shell is divided into two or more than two chambers (101,201). Each chamber has its own container chamber (102,202) and grinding set (150,250). On the shell of each chamber there is inlet hole (103) and outlet hole for each container chamber. In the shell there is also a motion changing set (130) that will drives every grinding unit's grinding driving axis (151,251) to operate, and a driving set (140) that will drives the motion changing set (130) to pass the motion to the motion units. By separating the interior of the shell into several grinding chambers (101,201), and put containing chamber and grinding mechanism inside each grinding chamber separately, the grinder contains several independent grinding system, which can grind different solid materials. And by engaging the motion changing set (130), different grinding systems share a driving unit that have one power input. Thus it is very convenient.

## Description

### Field of the invention

This utility patent is a kitchen appliance. To be exact, it is a multi-purpose solid material grinder that can grind two or more solid materials.

### Background of the invention

A traditional grinder can only operated on one solid material, such as the Chinese utility patent ZL01207465.9. In the patent published on Dec 19^{th}, 2001, this grinder includes an upper binding unit and a lower binding unit. Each binding unit has a tooth ring with screw threads. The user need to use both hands to rotate both upper and lower binding units. The particles are grinded between the teeth of the two tooth rings when they rotate. Between grinding two materials (such as pepper and salt), it is necessary to clean up the leftovers of the first material in the grinder, which is not convenient. Besides, there are always particle left in the grinder. Thus, when grinding the second material, the taste of the first material gets blended in. So, to avoid blending the taste and make it easier to cleanup, each material will require its specific grinder. There are so many different materials in the kitchen, using multiple special purpose grinders will cost much more, and it is easy to get confused, which is not convenient either.

### Summary of the invention

The technical issue that this utility patent aims to solve is: to overcome the current solid material grinder's inconvenience of operating only one material, to provide a multi-purpose solid material grinder that can grind two or more materials.

The technical solution to the technical issue of this utility patent is: to design a multi-purpose solid material grinder, which has a shell with material inlet and outlet. The interior of the said shell is divided into upper grinding chamber and lower grinding chamber. Each chamber has independent container chamber to collect solid material particles. On the shell of the chambers corresponding to the container chamber there are material outlets and inlets connecting to the container chambers. Each chamber between the container chamber and the outlet has grinding unit that is driven by the grinding driving shaft. In the shell there is also a motion changing set that will drives every grinding unit's grinding driving axis to operate, and a driving set that will drives the motion changing set to pass the motion to the motion units.

The said multi-purpose solid material grinder contains a clutch between the motion unit of the motion changing set and the grinder driving axis of each grinding unit.

In the said multi-purpose solid material grinder, the said clutch contains a first clutch gear and second clutch gear that can bite into each other. The said first clutch gear is fixed on the grinding driving axis of the grinding unit. There are motion limit slots on the motion unit of the motion changing set which is corresponding to the said second clutch gear to limit its motion.

In the said multi-purpose solid material grinder, the said motion changing set includes a driving cone gear that is driven by the driving set, and two horizontal serving cone gears that match the driving cone gear. The said motion limit slots are placed on the serving cone gear.

In the said multi-purpose solid material grinder, the said motion changing set includes a driving cone gear that is driven by the driving set, and two horizontal serving cone gears that match the driving cone gear. Each serving cone gear drives its corresponding driving unit.

In the said multi-purpose solid material grinder, the said grinding unit includes a fixed grinding block that is fixed on the chamber wall and a moving grinding block that is driven by the grinding driving axis. On the matching surfaces on the said fixed grinding block and moving grinding block there are grinding teeth.

In the said multi-purpose solid material grinder, the matching surfaces on the said fixed grinding block and moving grinding block are cone shaped. The said grinding teeth are cone shaped teeth on the cone shaped surface.

In the said multi-purpose solid material grinder, there are adjustment mechanism between the said grinding unit and the outlet. The said adjustment mechanism includes the sealing ring that is fixed to the outlet and the adjustment handle that matches the sealing ring screw teeth. The inner side of the adjustment handle matches the said moving grinding block of the said grinding unit. The distance between the adjustable moving grinding block and the fixed grinding block can be adjusted along the grinding driving axis by the handle. The said handle also has a hole to connect the outlet to the outside of the shell.

In the said multi-purpose solid material grinder, the said driving set includes a handle set which contains a fixed handle that is fixed on the shell and a moving handle that can swing along the shell, and a motion changing unit that is driven by the moving handle and drives the said driving cone gear.

In the said multi-purpose solid material grinder, the said motion changing unit includes a surface gear that is driven by the moving handle and a motivated gear that has the same axis with the said driving cone gear. The said surface gear bites into the said motivated gear.

In the said multi-purpose solid material grinder, the said driving unit includes a motor inside the shell and the electronic power source that serves electricity to the motor. The said motor drives the said driving cone gear and there is a switch between the said motor and the power source.

This multi-purpose solid material grinder has the following benefits. By dividing the interior of the shell into upper grinding chamber, setting individual container chamber and grinding unit into each chamber, and driving the two grinding units by the motion changing set driven by the driving unit, the grinder has two independent grinding systems, which can grind different solid materials. Also, the motion unit of the motion changing set can drive the two grinding units at the same time, which makes the two grinding systems share the same driving mechanism that has one single power input. This makes the operation very convenient.

Furthermore, there is clutch set between the motion unit and the grinding driving axis of each grinding unit. By controlling the clutch, the driving force that the motion changing set receives from the driving set can be selectively inputted into different grinding unit. Thus, when one grinding unit works, the other can be idle. To be specific, the said clutch contains a first clutch gear and second clutch gear that can bite into each other. The first clutch gear is fixed on the grinding driving axis, while the second clutch gear is placed in the motion limit slot of the motion unit. When the first clutch gear is over the second clutch gear, the second clutch gear will slide into the bottom of the motion limit slot by its weight and thus separate from the first clutch gear. Thus the motion inputted from the motion unit cannot be passed to the grinding driving axis through this clutch. When the whole multi-purpose solid material grinder turns 180 degrees, the first clutch gear is placed under the second clutch gear. The second clutch gear by its weight glides into the first clutch gear and bites into the first clutch gear. Thus the motion unit that limits the second clutch gear's motion can drive to rotate the grinding driving axis that is fixed to the first clutch gear. The grinding unit is thus operating. When in use, one of the two (upper/lower) grinding chambers of this multi-purpose solid material grinder is working while the other doesn't. Thus the driving force needed for the driving set is not too much to bear, making it easier to use.

The technical issue that this utility patent aims to solve is: to overcome the current solid material grinder's inconvenience of operating only one material, to provide a multi-purpose solid material grinder that can grind two or more materials.

The technical solution to the technical issue of this utility patent is: to design a multi-purpose solid material grinder, which has a shell with material inlet and outlet. The interior of the said shell is divided into multiple grinding chambers. Each grinding chamber has its individual its independent container chamber to contain solid material particle. On the shell of the chambers corresponding to the container chamber there are material outlets and inlets connecting to the container chambers. Each chamber between the container chamber and the outlet has grinding unit that is driven by the grinding driving shaft. In the shell there is also a motion changing set that will drives every grinding unit's grinding driving axis to operate, and a driving set that will drives the motion changing set to pass the motion to the motion units. In addition, the said motion changing set includes a driving cone gear that is driven by the driving set, and horizontal serving cone gears that are set on each grinding driving axis. Each said serving cone gear matches the driving cone gear directly or indirectly.

The multi-purpose solid material grinder of this patent has the following benefits. By separating the shell into multiple grinding chambers, and setting independent container chamber, material inlet, outlet, and grinding unit between the container chamber and outlet, there are multiple independent grinding systems in the shell to handle different types of solid materials. Each grinding system is driven by the motion changing set inside the shell. The motion changing set is driven by the same driving set. Thus multiple grinding systems are driven by the same driving set. It is very easy to operate. Further, the driving set can be cone gear set that is between the driving set and the grinding units.

Followed are the further explanations of this patent, with figures and an implementation example.

### Brief description of the drawings

Figure-1 is the full exterior view of this multi-purpose solid material grinder of this patent.
Figure-2 is the interior structural view of this multi-purpose solid material grinder of this patent.
Figure-3 is the dissembled view of Figure-2.
Figure-4 is the sectional view of Figure-2.
Figure-5 is the dissembled view of the shell of the selected implementation for this multi-purpose solid material grinder of this patent.
Figure-6 is the dissembled view of the interior of the shell of the selected implementation for this multi-purpose solid material grinder of this patent.
Figure-7 is the angled view of the driving set, motion changing set, and grinding unit of the selected implementation for this multi-purpose solid material grinder of this patent.
Figure-8 is the dissembled view of Figure-7.
Figure-9 is the section A-A view of Figure-7.
Figure-10 is the section B-B view of Figure-7.
Figure-11 is the amplified view of Part I of Figure-4.
Figure-12 is the angled view of the adjustment unit of the selected implementation for this multi-purpose solid material grinder of this patent.
Figure-13 is the section view of Figure-12.
Figure-14 is the section C-C view of Figure-13.
Figure-15 is the section D-D view of Figure-13.
Figure-16 is the structural view of the motion changing set of another implementation for this multi-purpose solid material grinder of this patent.
Figure-17 is the structural view of the motion changing set of another implementation for this multi-purpose solid material grinder of this patent.

### Detailed description of the embodiment

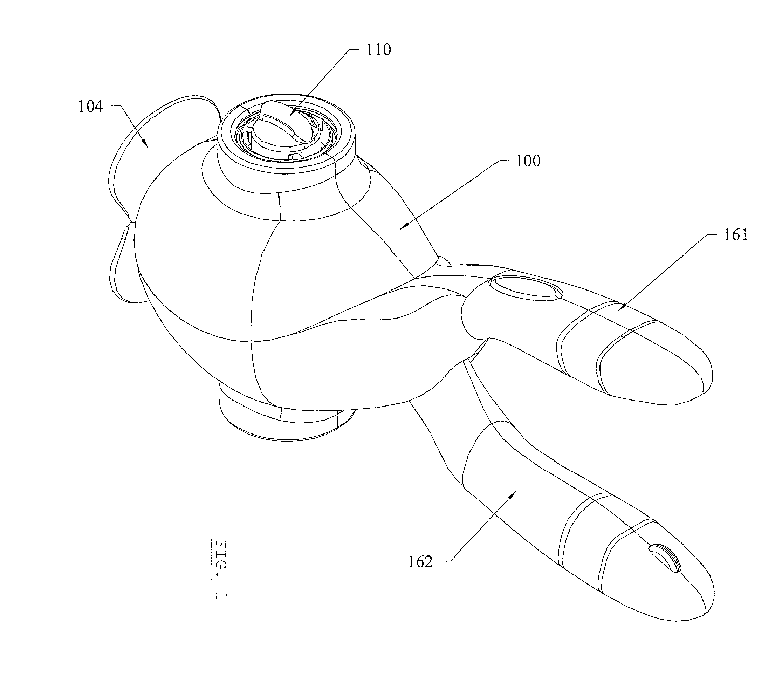

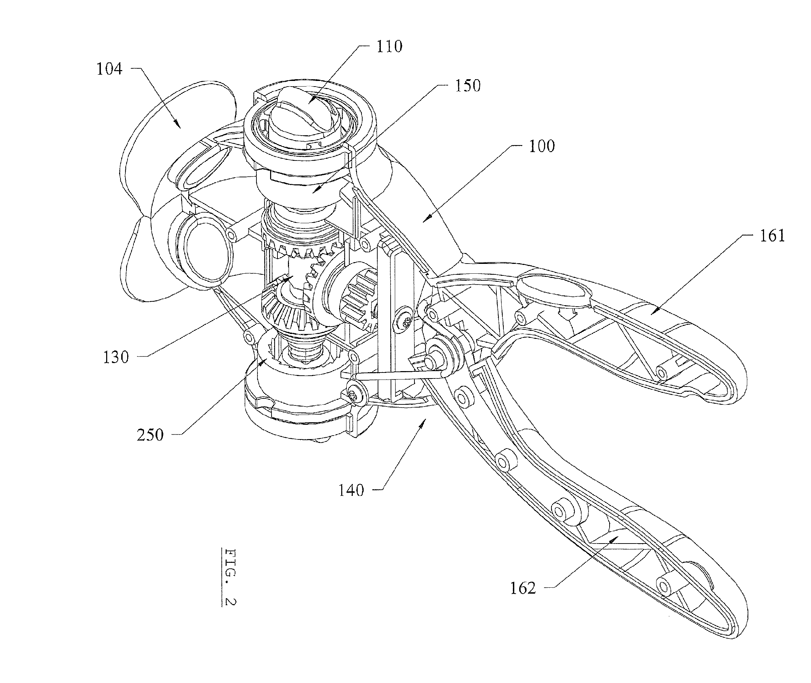

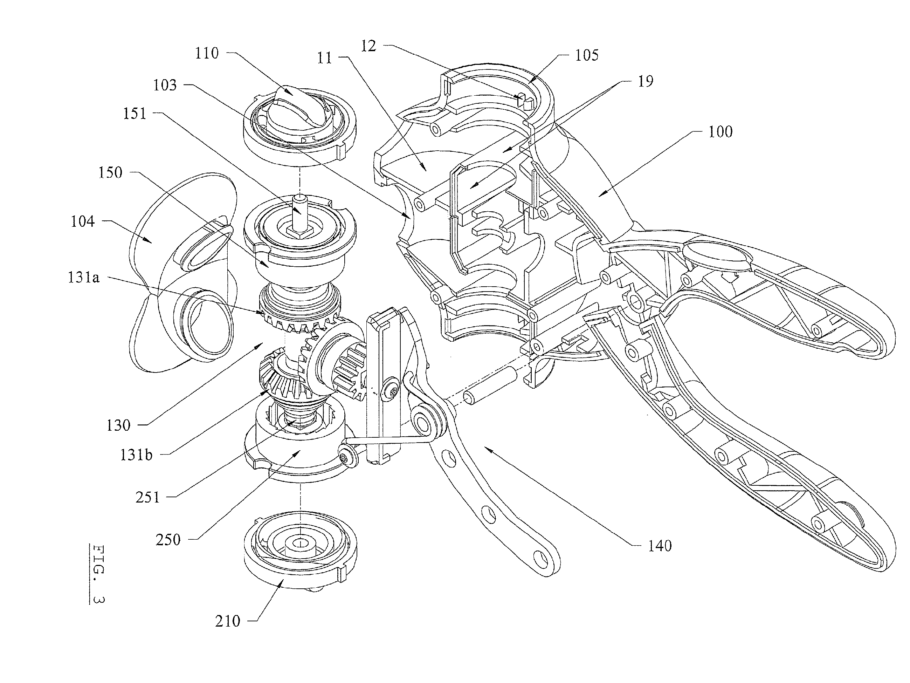

As shown in Figure 1, 2, 3, and 4, the selected implementation for this multi-purpose solid material grinder of this patent includes shell 100, adjustment mechanism 110 and 210 that are inside the shell 100, clutch 120 and 220, motion changing set 130, driving set 140, and two grinding units 150 and 250. Driving set 140 drives motion changing set 130 to make the two motion unit 131a and 131b of the motion changing set 130 to spin. The two motion unit 131a and 131b will drive the grinding driving axis 151 and 251 of the grinding units 150 and 250 to spin. Thus the driving set 130 can drive the two grinding units inside shell 100, making the two grinding units 150 and 250 to grind two different types of materials.

As shown in Figure 1, 2, 3, 4, and 5, the interior of shell 100 is divided to upper grinding chamber 101 and lower grinding chamber 201. Each grinding chamber (101 or 201) has a container chamber (102 or 202) and a grinding unit (150 or 250). In the example of the grinding system in the grinding chamber 101, container chamber 102 contains the solid material particles and introduces the solid material particle into the grinding unit 150. Container chamber 102 can be formed by using the separation board 11 inside the interior of the shell to divide the interior. On the shell 100 there is a material inlet 103 that is connected to the container chamber 102. It is used to input solid material particles into the container chamber 102. Each container chamber 102 has its own inlet 103. For each inlet 103, it is recommended but not required to have a inlet cover 104 to seal inlet 103, so that when grinding, the solid particles will not get out through inlet 103, as well as protecting outside dirt from entering the container 102 through inlet 103 to contaminate the solid material. Similarly, there is outlet 105 on the shell 100. Grinding unit 150 is set between the container 102 and outlet 105 to grind the solid material particles inside the container chamber 102 and discharge the end product through outlet 105.

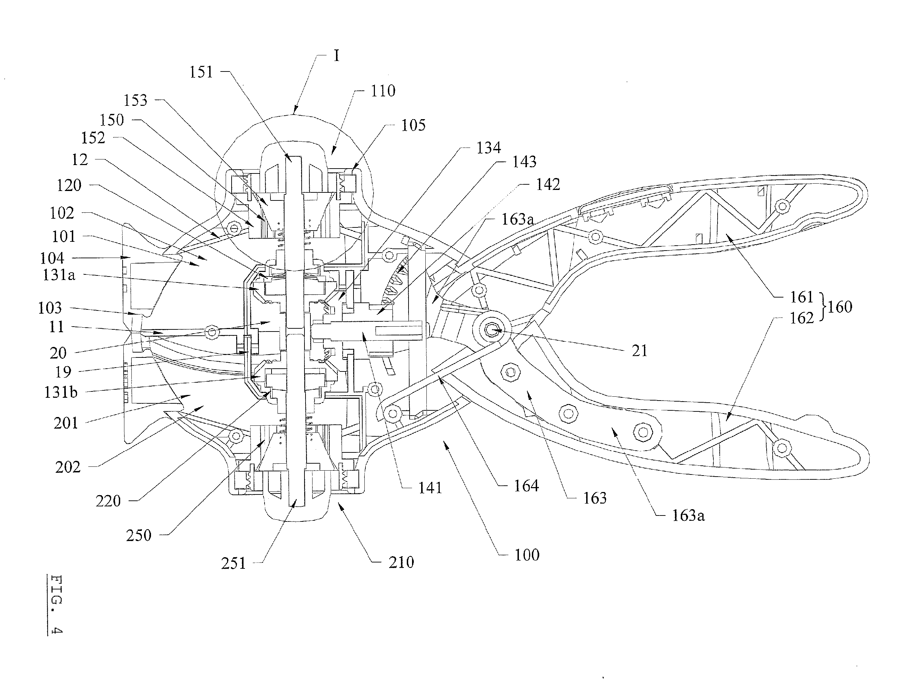

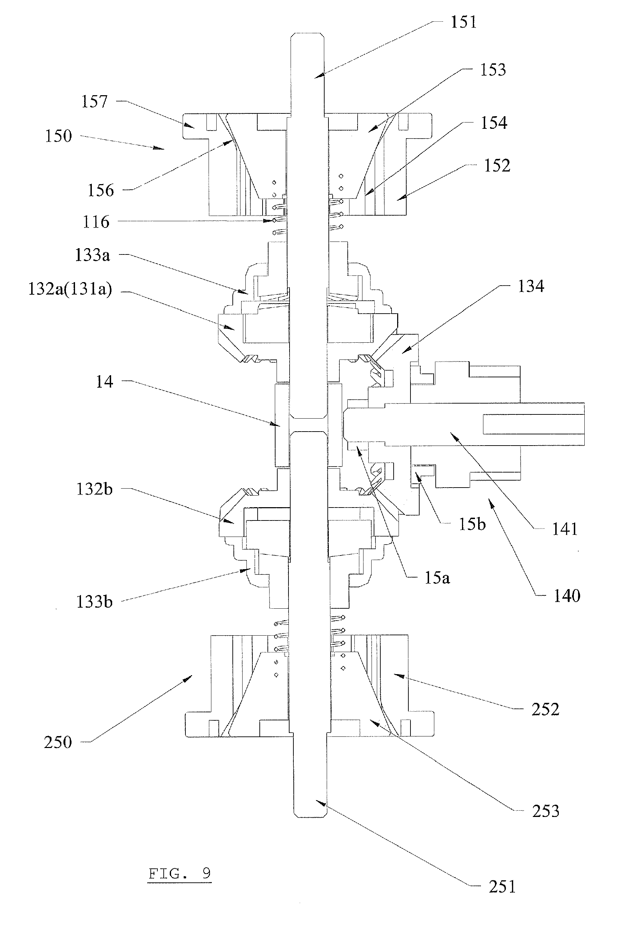

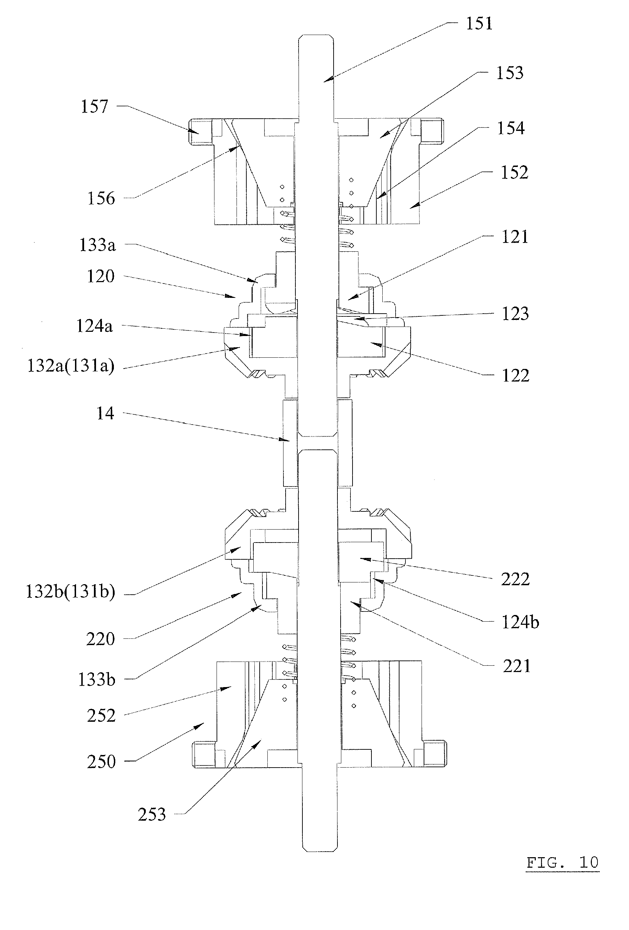

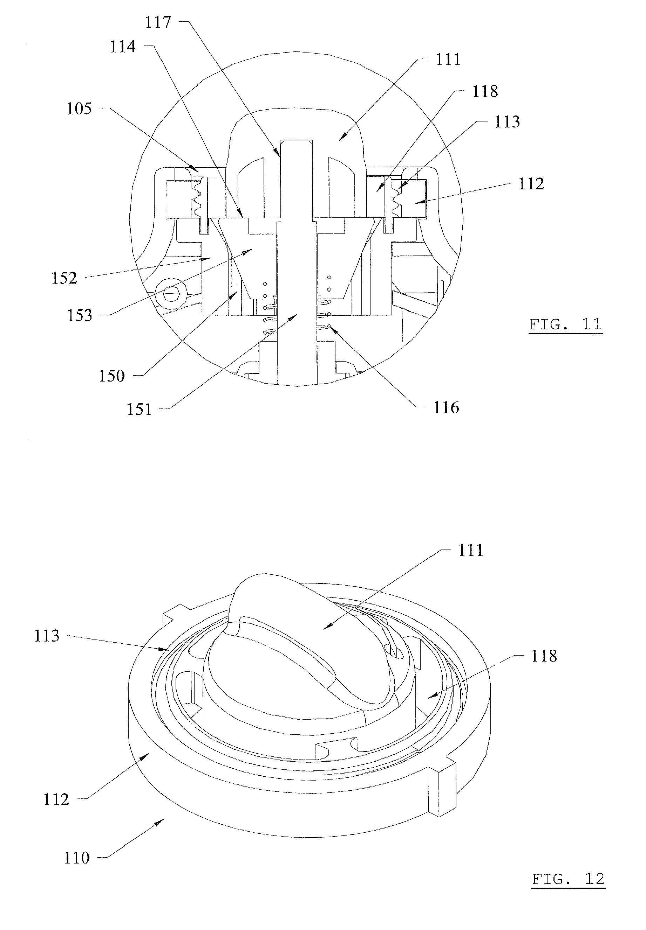

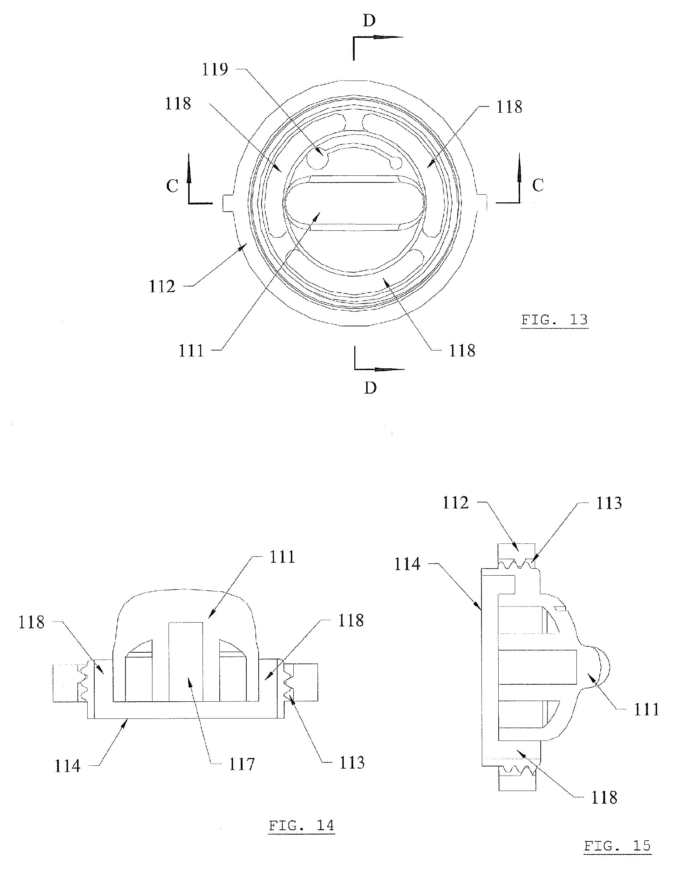

As an example, in the grinding unit of the grinding chamber 101, the grinding unit 150 is fixed on the shell of the upper grinding chamber 101. Holding board 12 inside the upper grinding chamber 101 can be used to position the grinding unit 150 in the upper grinding chamber 101. Grinding unit 150 can be any regular grinding mechanism that is currently available, as long as the grinding unit can be conveniently set inside the grinding chamber and can be driven by the grinding driving axis 151. As shown in Figure 4, 8, 9, and 10, in this selected implementation, the grinding unit 150 includes two matching grinding blocks: fixed grinding block 152 and moving grinding block 153. Holding board 12 inside the shell 100 can be used to position the fixed grinding block 152 in the upper grinding chamber 101. Moving grinding block 153 is set on the grinding driving axis 151 and can spin together with the grinding driving axis 151. The section view of the grinding driving axis 151 where it matches the moving grinding block 153 can be square of polygon so that is can drive the moving grinding black 153 to spin. On the matching interface between the fixed grinding block 152 and moving grinding block 153 there are grinding teeth 154. The material particles inside the container chamber 102 can be introduced into the space between fixed grinding block 152 and moving grinding block 153. When the driving unit 140 drives the motion changing set 130 and thus the motion unit 131a of the motion changing set to drive the grinding driving axis 151 of the grinding unit, the moving grinding block 153 will move against fixed grinding block 152. The grinding teeth 154 that are between the fixed grinding block 152 and moving grinding block 153 will smash the material particles and discharged out through the outlet 105. As shown in Figure 9 and 10, it is recommended that the fixed grinding block 152 is set to be inner tooth, which means the grinding teeth 154 being set inside the fixed grinding block 152's inner hole. The moving grinding block 153 inserts into the inner hole 155 of the fixed grinding block 152. The matching surface 156 between the fixed grinding block 152 and moving grinding block 153 can be set as cone shaped to help the material particles into the space between them. Extruding rim 157 can also be set on the fixed grinding block 152, which will be stuck in the shell 100. Thus the fixed grinding block 152 can be fixed in the upper grinding chamber 101.

In this selected implementation, it is recommended to place a adjustment mechanism 110 between grinding unit 150 and outlet 105. As shown in Figure-11, 12, 13, 14, and 15, the adjustment mechanism 110 includes adjustment handle 111 and sealing ring 112. Sealing ring 112 is installed at outlet 105. There is a screwed hole 113 on the sealing ring 112. Adjustment handle 111 matches into the screwed hole 113 to fit in into sealing ring 112. The inner surface 114 of adjustment handle 111 matches into the moving grinding block 153. When rotating adjustment handle 111, it moves against sealing ring 112 along the grinding driving axis 151. Adjustment handle 111 can push the moving grinding block 153 on the grinding driving axis 151 to move, thus adjusting the space between the fixed grinding block 152 and moving grinding block 153, so that to change the size of the ground particles. To make sure that moving grinding block 153 can retreat to its original position, it is suggested to place an elastic piece, such as a spring, between the moving grinding unit 153 and the motion changing set 130. Thus the moving grinding unit 153 is always touching the inner surface 114 of the adjustment handle 111. The elastic piece 116 can also be placed between the moving grinding block 153 and the shell, or between the moving grinding block 153 and the extension board in the shell. It is also recommended a round hole 117 is placed on the inner end of adjustment handle 111. Adjustment handle 111 is fixed into the end of grinding driving axis 151 and can rotate around the grinding driving axis 151. Thus one end of the grinding driving axis 151 is fixed. The other end of grinding driving axis 151 is set in the axis socket 14 (as shown in Figure-14) that is fixed on the shell 100 to stop the grinding driving axis 151 from shaking. At the same time, to help the ground material particles discharging from shell 100, there is a through hole 118 on the adjustment handle 111. This through hole 118 connects the inner surface 114 of the adjustment handle to the outside of shell 100. The material particles that go through the fixed grinding block 152 and moving grinding block 153 can be discharged outside shell 100 through the through hole 118 for cooking purpose. As shown in Figure-13, sign 119 can also be placed on the outside surface of the adjustment handle 111 to show the rotation direction of the adjustment handle to adjust the size of the particles.

As shown in Figure-8, 9, and 10, there is a grinding system in the lower grinding chamber that is identical to the grinding system in the said upper grinding chamber 101. It has the same container chamber 202, material inlet 203, outlet 205, and grinding unit 250. The grinding unit 250 also has the grinding driving axis 251, the fixed grinding block 252 and moving grinding block 253. There is also an adjustment mechanism 210 between the grinding unit 250 and the outlet 205.

In this selected implementation, the motion changing set 130 can drive the grinding driving axis 151 and 251 of the two grinding units through the motion unit 131a and 131b. As shown in Figure-6, 7, 8, and 9, motion changing set 130 includes driving cone gear 134 and two serving cone gear 132a and 132b, which match into each other. The serving cone gear 132a and 132b are the motion unit 131a and 131b that drive grinding driving axis 151 and 251 to rotate. The driving cone gear 134 is placed horizontally and driven by the driving set 140. Driving cone gear 134 is installed on the horizontal driving axis 141 of the driving set 140 and shares the same central axis as the horizontal driving axis 141. One end of the horizontal driving axis 141 is fixed in the two horizontal axis socket 15a and 15b that are fixed in the shell 100. The other end of horizontal driving axis 141 is fixed by a screw bolt 16 on the column 17 that is set inside the shell. Thus horizontal driving axis 141 is fixed inside shell 100. The two surface of the driving cone gear 134 is limited by the surfaces of the two horizontal axis socket 15a and 15b. Thus the driving cone gear 134 can only rotate with the horizontal driving axis 141 inside shell 100. Two serving cone gear 132a and 132b are fit into the two grinding driving axis 151 and 251 that are horizontally placed inside the two grinding chambers. The two surfaces of the serving cone gear 132a and 132b directly face the horizontal axis socket 14 and the cushier 133a and 133b that are set inside shell 100. The two serving cone gear 132a and 132b are placed on the upper and lower side of the driving cone gear 134 and match into the driving cone gear 134. Thus driving cone gear 134 can drive the two serving cone gear 132a and 132b at the same time. Thus a single driving set 140, after motion changing set 130, can drive two grinding systems that are placed in different grinding chambers to work.

In this multi-purpose solid material grinder of this patent, serving cone gear 132a and 132b can be directly fixed onto grinding driving axis 151 and 251 to drive grinding driving axis 151 and 251, or can drive grinding driving axis 151 and 251 by motion transferring units. As shown in Figure-8, 9, and 10, in this selected implementation, there are also clutches 120 and 220 between motion unit 131a and 131b (which is also serving cone gear 132a and 132b) and grinding driving axis 151 and 251. Motion unit 131a and 131b drive the corresponding grinding driving axis 151 and 251 through clutches 120 and 220.

Let's take a look at the clutch 120 that matches with the grinding system in the upper grinding chamber. Clutch 120 includes first clutch gear 121 and second clutch gear 122 which match into each other. Between first clutch gear 121 and second clutch gear 122 there are matching clutch teeth 123. It is recommended that the clutching surface between first clutch gear 121 and second clutch gear 122 to be at right angle with the grinding driving axis 151. First clutch gear 121 is fixed on the grinding driving axis 151. Second clutch gear 122 is set in the motion limiting slot 124a of the motion unit 131a. In this selected implementation, motion unit 131a is the serving cone gear 132a that is in the motion changing set 130. Thus motion limiting slot 124a is set on the top of the serving cone gear 132a. Motion limiting slot 124a is a sink that matches the shape of second clutch gear 122. Thus second clutch gear 122 can move along the grinding driving axis 151 in the motion limiting slot 124a. Because of the limitation of motion limiting slot 124a, second clutch gear 122 cannot spin around grinding driving axis 151. Positioning rib 125a can be set on the surface of second clutch gear 122, and positioning slot 126a can be set on the wall of the motion limiting slot 124a to match positioning rib 125a, so that to limit the spinning of second clutch gear 122 around motion limiting slot 124a. To make the installation easier, second clutch gear 122 and serving cone gear 132 are also set on the grinding driving axis 151. But the inner holes of second clutch gear 122 and serving cone gear 132 that holds grinding driving axis 151 are round. So the motion unit 131a of the motion changing set (i.e., the serving cone gear 132a) will not directly drive grinding driving axis 151. Instead, it must go through clutch 120 to drive grinding driving axis 151. The clutch 220 that matches into the grinding system of the lower grinding chamber has the similar structure.

The status of clutch 120 is changed by the up and down movement of second clutch gear 122 along the motion limiting slot 124a under its weight. As shown in Figure 9 and 10, in the clutch 120 that matches into the grinding system of the upper grinding chamber, the first clutch gear 121 is fixed into cushier 133a and can drive the grinding driving axis 151 to spin. Second clutch gear 122 slides down to the bottom of the motion limiting slot 124a along the motion limiting slot 124a under its own weight. At this time the clutch surface between first clutch gear 121 and second clutch gear 122 is separated. The whole clutch is in neutral mode. At the time, although the motion unit 131a (i.e., the serving cone gear 132a) of motion changing set 130 spins under the driving force of driving set 140, since the clutch is in neutral mode, the grinding driving axis 151 is not going to spin, i.e, the grinding unit 150 in the upper grinding chamber 101 is not going to work. At the same time, in the clutch 220 of the lower grinding chamber 201, the first clutch gear 221 is embedded in the cushier 133b and can drive grinding driving axis 251 to spin. And the second clutch gear 222 of this clutch 200 slides along the motion limiting slot 124b by its own weight to the clutch surface of first clutch gear 221, thus biting into the first clutch gear 221. The whole clutch 220 is in working mode. At this time, the other motion unit 131b is driven by the driving set 140 to spin. Through clutch 220 it drives the grinding driving axis 251 in the lower grinding chamber. Thus the grinding system in the lower grinding chamber is working. Thus, under the control of the clutch system, this grinder can choose one grinding system to work while the others not. This will reduce the noise of the grinding operation, and reduce the wear and tear of the idling grinding operation, thus increase the life span of the grinder.

To prevent the solid material particles from entering the motion changing set 130 and interfering with the gears matching, it is recommended that an extension board 19 is set between the upper and lower grinding chamber in the shell 100 to create an independent motion chamber 20. Motion changing set 130 and clutch 120 and 220 are all installed in this chamber. Grinding driving axis 151 and 251 extend into motion chamber 20 to match with motion unit 131a and 131b, thus connecting motion changing set 130 and grinding unit 150 and 250.

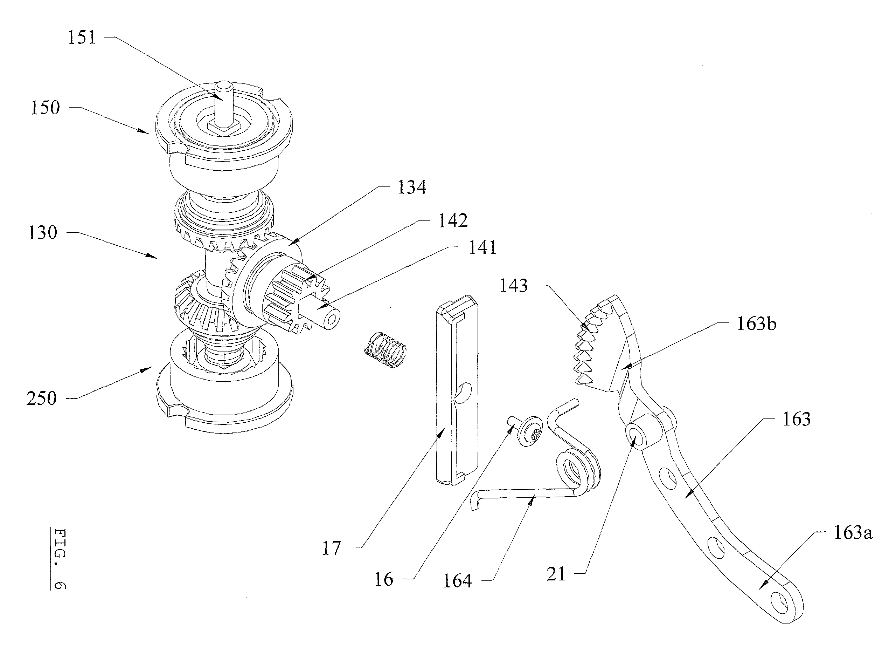

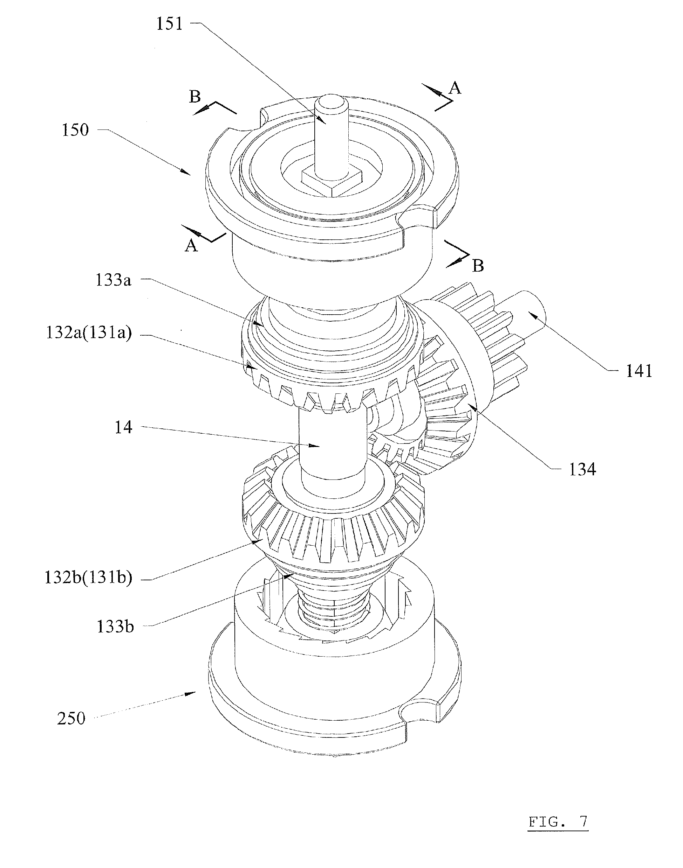

As shown in Figure 4, 6, and 8, the driving set 140 of this selected implementation includes a horizontal driving axis 141, motivation gear 142, and surface gear 143. Motivation gear 142 can be a cylinder gear, is set around horizontal driving axis 141, and will drives horizontal driving axis 141 to spin. Surface gear 143's rotation center is at right angle with the rotation center of motivation gear 142. Thus the rotation of surface gear 143 can be passed to motivation gear 142 with a different direction. In the rotation center of surface gear 143 there is a positioning bolt 21 to fix surface gear 143 into shell 100.

As shown in Figure 1, 2, 3, and 4, to help easier operation, the driving set 140 also includes a handle set 160 that is on the shell 100. Handle set 160 includes a fixed handle 161 that is installed on shell 100 and a moving handle 162 that can move back and forth against shell 100. Moving handle 162 has a beam 163 whose center is fixed into positioning bolt 21. Thus beam 163 is fixed inside shell 100. One of its ends 163a is attached to moving handling 162, while the other end is attached to the surface gear 143. On beam 163 there is also a spring 164 whose center is also attached to positioning bolt 21. One arm of spring 164 is set on the end 163b of beam 163 that is closer to surface gear 143. The other arm of spring 164 is set inside shell 100. Thus the moving handle 162 can swing back under the force of spring 164 when swing closer to fixed handle 161. Thus the moving handle 162 can swing back and forth.

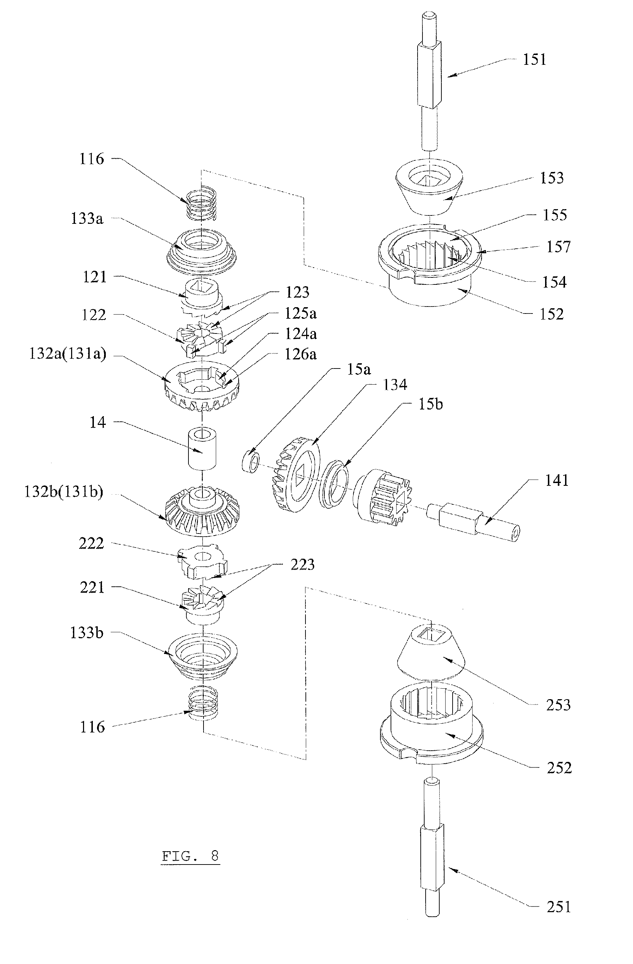

When operating, the back and forth swing of moving handle 162 drives the surface gear 143 to swing back and forth. Thus the motivation gear 142 that bites into the surface gear 143 spins back and forth, and makes the driving cone gear 134 spins back and forth through the horizontal driving axis 161. Thus the driving set 140 drives the motion changing set 130 to move. The driving cone gear 134 drives the two matching serving cone gear 132a and 132b to move back and forth, thus making the motion unit 131a and 131b spinning back and forth. Motion unit 131a and 131b controls the motion of grinding driving axis 151 and 251 through clutch 120 and 220, making the grinding unit 150 and 250 work. It is possible to set the clutch teeth 123 and 223 between first clutch gear 121 and 221 and second clutch gear 122 and 222 as one-way clutch teeth. As shown in Figure 8, 9, and 10, in the clutch 220 of the lower grinding chamber 201, when the serving cone gear 132b drives second clutch gear 222 to rotate clockwise, first clutch gear 221 will spin to drive the corresponding grinding unit 250 working. When the serving cone gear 132b drives second clutch gear 222 to rotate counterclockwise, first clutch gear 221 cannot spin, and thus drive the corresponding grinding unit 250 will stop working. This way, the grinding driving axis 251 in the grinding unit will drive the moving grinding block to rotate in one direction intermittently.

In the abovementioned implementation, driving cone gear can also be driven by electric motor. In one implementation, the driving set includes a motor and a power source that supplies the motor with electricity. Power source can be a removable battery inside the shell. The spinning axis of the motor matches into the driving cone gears. Switch is set between the power source and the motor. By controlling the switch, the user can control the motor's working status and drives the driving cone gear.

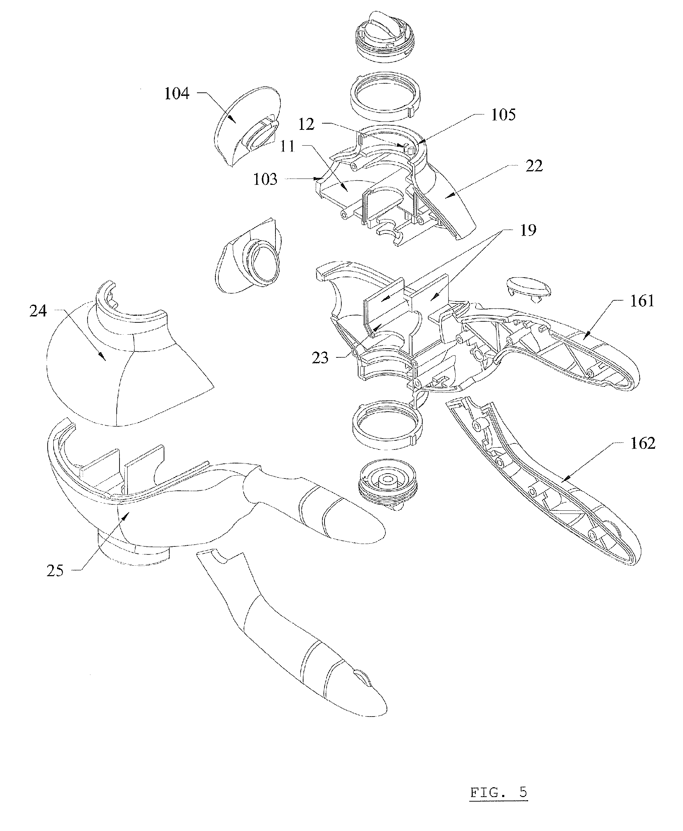

In the abovementioned implementation, to make it easier to install different units into shell 100, it is recommended to set shell 100 into several parts. Different parts can be assembled together by snap or by screw. As shown in Figure 5, in this implementation, shell 100 consists of upper left shell 22, lower left shell 23, upper right shell 24, and lower right shell 25.

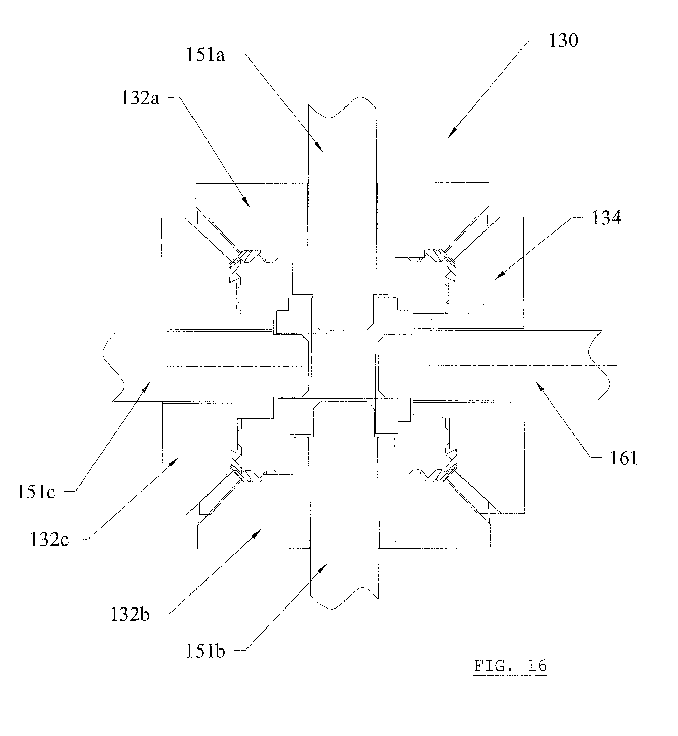

In the abovementioned implementation, motion changing set 130 can be of other forms. Similarly, the multi-purpose solid material grinder of this patent can have three sets or even more grinding systems. This multi-system multi solid material grinder also has a shell 100 with material inlet and outlet. There are multiple grinding chambers inside the shell. Each grinding chamber has its own container chamber. Corresponding to each container chamber, there are independent material inlets and outlets on the shell 100. Grinding units driven by grinding driving axis are set in each grinding chamber between the container chamber and outlet. All driving axis of all grinding systems are driven by the motion changing set 130. Motion changing set 130 is driven by driving set 140. As shown in Figure 16, in another implementation of this multi-purpose solid material grinder of this patent, the motion changing set 130 includes a driving cone gear 134 and three grinding cone gear 132a, 132b, and 132c, which are set on three grinding driving axis 151a, 151b, and 151c. Three grinding cone gear 132a, 132b, and 132c directly bite into driving cone gear 134. When driving set 140 drives driving cone gear 134 to spin through the horizontal driving axis 141, the driving cone gear 134 will drive the three grinding cone gear 132a, 132b, and 132c to spin, thus drives the corresponding grinding units to work through grinding driving axis 151a, 151b, and 151c. So the same driving set 140 can drive three different grinding set to work. Similarly, there can be clutch set between grinding cone gear 132a, 132b, and 132c and grinding driving axis 151, so that the user can choose different grinding unit to work at any given time.

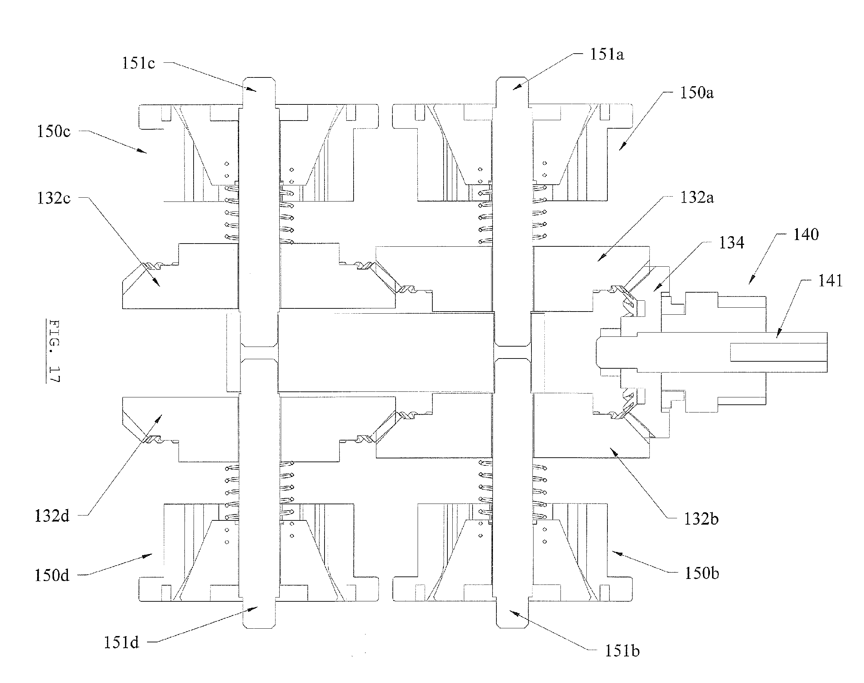

In yet another implementation of the multi-purpose solid material grinder of this patent, the grinder has four grinding systems. Similar to the implementation described above, each grinding system is set in the grinding chamber that is created by dividing the inner space of the shell. Each grinding chamber has container chamber and grinding system 150a, 150b, 150c, and 150d. All grinding systems are driven by grinding driving axis 151a, 151b, 151c, and 151d. All grinding driving axis 151a, 151b, 151c, and 151d are driven by motion changing set 130. As shown in Figure 17, in this implementation, motion changing set 130 includes driving cone gear 134 and four grinding cone gears 132a, 132b, 132c, and 132d, which are set on the grinding driving axis 151a, 151b, 151c, and 151d. These four grinding cone gears 132a, 132b, 132c, and 132d bite into the driving cone gear 134 directly or indirectly. Grinding cone gears 132a and 132b directly match into the driving cone gear 134 while grinding cone gear s132c and 132d match into the grinding cone gears 132a and 132b. Driving set 140 drives the horizontal driving axis 141 to spin, thus makes the driving cone gear 134 rotate, and further makes the four grinding cone gears 132a, 132b, 132c, and 132d rotate. The same driving set thus can drive multiple grinding sets, making the same grinder capable of grinding several different types of materials.

The abovementioned implementations are some possible implementations of this patent. They have a relatively detailed description. However, this should not be interpreted as limiting the scope of this patent. For normal technical person in this field, it is possible to make further adjustments and improvements based on this patent's ideas. These are all covered by the patent protection. Therefore, the protection scope of this patent should be based on the attached claims.

## Claims

1. A multi-purpose solid material grinder comprising:
a shell having a material inlet and a material outlet;
an interior of said shell being separated into an upper grinding chamber and a lower grinding chamber, each chamber has an independent container chamber to collect solid material particles;
the material outlets and inlets being on the shell corresponding to the container chambers and connecting the container chambers respectively;
each container chamber near the outlet has a grinding unit that is driven by a grinding driving axis;
in the shell there is a motion changing set that drives said grinding units through the grinding driving axis; and
a driving set that drives the motion changing set to pass motion to motion units.

2. The multi-purpose solid material grinder according to Claim 1, wherein further comprises a clutch between the motion changing set and the grinder driving axis of each grinding unit.

3. The multi-purpose solid material grinder according to Claim 2, wherein said clutch comprises a first clutch gear and a second clutch gear, which both gears can be engaged together or separated, said first clutch gear is fixed on the grinding driving axis of the grinding unit, there are motion limit slots on the motion unit of the motion changing set which is corresponding to said second clutch gear to limit its motion.

4. The multi-purpose solid material grinder according to Claim 3, wherein said motion changing set includes a driving cone gear that is driven by the driving set and two horizontal serving cone gears that match the driving cone gear, said motion limit slots are placed on the serving cone gear.

5. The multi-purpose solid material grinder according to Claim 1, wherein said motion changing set includes a driving cone gear that is driven by the driving set and two horizontal serving cone gears that match the driving cone gear, each serving cone gear drives its corresponding driving unit.

6. The multi-purpose solid material grinder according to Claim 5, wherein said grinding unit includes a fixed grinding block fixed on a wall of the grinding chamber and a moving grinding block driven by the grinding driving axis, said fixed grinding block and moving grinding block have grinding teeth on their surfaces respectively, which match with each other.

7. The multi-purpose solid material grinder according to Claim 6, wherein the matching surfaces on said fixed grinding block and moving grinding block are cone shaped, said grinding teeth are cone shaped teeth on cone shaped surface.

8. The multi-purpose solid material grinder according to Claim 6, wherein an adjustment mechanism is positioned between said grinding unit and the outlet, said adjustment mechanism includes a sealing ring fixed to the outlet and an adjustment handle matching screw teeth of the sealing ring, a side of the adjustment handle matches said moving grinding block of the said grinding unit, a distance between the adjustable moving grinding block and the fixed grinding block can be adjusted along the grinding driving axis by the handle, said handle also has a hole to connect the outlet to outside of the shell.

9. The multi-purpose solid material grinder according to Claim 5, wherein said driving set includes a handle set that contains a fixed handle fixed on the shell, a moving handle that can swing along the shell, and a motion changing unit that is driven by the moving handle and drives said driving cone gear.

10. The multi-purpose solid material grinder according to Claim 9, wherein said motion changing unit includes a surface gear driven by the moving handle and a motivated gear having same axis with said driving cone gear, said surface gear matches with said motivated gear.

11. The multi-purpose solid material grinder according to Claim 5, wherein said driving unit includes a motor inside the shell and an electronic power source that serves electricity to the motor, said motor drives said driving cone gear, and there is a switch between the said motor and the power source.

12. A multi-purpose solid material grinder comprises a shell with an inlet and an outlet; an interior of said shell is divided into several grinding chambers; each chamber has its own container chamber for solid material particles; on the shell of the grinding chamber, corresponding to each container chamber there are material outlets and inlets that connects to the container chambers; each container chamber has a grinding unit that is between the container chamber and material outlet and driven by a grinding driving axis; inside said shell there is also a motion changing set that will drives every grinding unit's grinding driving axis to operate, and a driving set that will drives the motion changing set to pass the motion to the motion units.

13. The multi-purpose solid material grinder according to Claim 12, wherein said motion changing set comprises a driving cone gear driven by the driving unit and serving cone gear fixed on each grinding driving axis, said serving cong gear matches directly or indirectly with the driving cone gear.
